# DEMANDE DE BREVET EUROPEEN

(11) **EP 0 755 128 A1**
(43) Date de publication de la demande: **22.01.1997**
(21) Numéro de dépôt: 96410077.0
(22) Date de dépôt: 09.07.1996
(51) Int. Cl.: H04B 3/54

(54) **Circuit de transmission de données binaires sur le réseau électrique utilisant plusieurs canaux de transmission**

(30) Priorité: 13.07.1995 FR 9508762
(71) Demandeur: SGS-THOMSON MICROELECTRONICS S.A., 94250 Gentilly (FR)
(72) Inventeur: Huloux, Joel, 38420 Le Versoud (FR)
(74) Mandataire: de Beaumont, Michel

(57) **Abrégé**

L'invention concerne un circuit de transmission de données binaires sur le réseau électrique du type comportant un modulateur (5), un démodulateur (8) et un circuit numérique (15) de commande du modem et d'interprétation des données binaires, et comportant un circuit d'affectation d'un canal de transmission à une communication et des moyens pour sélectionner, parmi plusieurs canaux, un canal libre.

## Description

La présente invention concerne le domaine des modulateurs/démodulateurs (modems) numériques utilisant le réseau électrique comme support de transmission. L'invention s'applique plus particulièrement à l'affectation d'un canal à une transmission entre au moins deux modems raccordés sur un même réseau.

Les modems utilisant le réseau électrique comme support de transmission sont notamment utilisés pour des applications de domotique. Dans de telles applications, différents appareils électriques (chauffage, éclairage, alarme, etc.) raccordés au réseau sont associés à des modems et sont ainsi susceptibles d'être commandés par une centrale de commande selon un scénario temporel et/ou faisant intervenir des capteurs (température, incendie, inondation, effraction, etc.). La centrale est généralement associée à un système de réception d'instructions transmises par le réseau téléphonique pour permettre une commande ou une programmation de scénarios à distance de l'installation domotique.

Dans une telle installation, le réseau électrique à 50 ou 60 Hz constitue le support de transmission. On utilise généralement une modulation par saut de fréquence (couramment appelée modulation FSK d'après l'expression anglo-saxonne Frequency Shift Keying). Les données à transmettre sont codées sous forme binaire puis converties en signal analogique, par exemple, sous forme d'échantillons de portions de l'une ou l'autre de deux fréquences fₐ et f_{b} qui constituent le signal à transmettre sur le réseau. L'amplitude de la modulation est faible (de l'ordre du volt) devant la tension du réseau électrique afin de ne pas nuire à l'alimentation des différents appareils.

On peut également rencontrer des installations utilisant une modulation par saut d'amplitude (couramment appelée modulation ASK d'après l'expression anglo-saxonne Amplitude Shift Keying). Les données binaires sont ici converties en un signal analogique, sous forme d'échantillons de portions d'une fréquence qui constitue le signal à transmettre sur le réseau.

Un inconvénient des modems existants est qu'ils ne permettent pas la présence de plusieurs communications simultanées sur un même réseau entre des modems différents. En effet, comme ces communications sont toutes émises par des modulateurs FSK prévus pour fonctionner sur deux fréquences fₐ et f_{b}, les messages se trouvent alors mélangés et ne peuvent plus être décodés correctement.

Un autre inconvénient des modems existants est lié à l'utilisation du réseau électrique comme support de transmission. En effet, le signal reçu par un modem donné est susceptible d'être fortement atténué en raison du support de transmission utilisé. Cette atténuation qui est variable et incontrôlable a essentiellement deux causes.

En premier lieu, l'impédance du réseau aux fréquences utilisées pour la modulation varie en fonction des charges qu'il alimente. Cette variation d'impédance qui est essentiellement inductive et, par exemple, comprise entre 1,5 et 80 Ω à la fréquence de 100 kHz est incontrôlable car elle dépend des charges alimentées dans l'installation concernée et de l'impédance du transformateur de distribution d'électricité sur lequel l'installation est raccordée. De plus, l'impédance du réseau dépend des charges alimentées dans toutes les installations qu'il alimente. L'atténuation due à ces variations d'impedance est, par exemple, comprise entre environ 2 et 40 dB pour une charge typiquement résistive.

En second lieu, les connexions électriques atténuent le signal. L'atténuation est plus importante si le signal émis par un modem donné est destiné à un modem raccordé à une autre branche du circuit électrique. En d'autres termes, la traversée du tableau de répartition et des fusibles ou disjoncteurs qu'il comporte entraîne une atténuation importante du signal (de l'ordre de 20 à 30 dB).

La présente invention vise à pallier ces inconvénients en autorisant l'emploi de plusieurs canaux de transmission par un même modem.

L'invention vise également à permettre l'établissement de communications simultanées entre différents modems raccordés sur un même réseau.

L'invention vise également à sélectionner automatiquement le meilleur canal de transmission.

L'invention vise également à proposer un circuit d'affectation qui n'entraîne pas de modification de structure des modems existants.

L'invention vise également à ce que des circuits d'affectations disposant d'un nombre différent de canaux soient compatibles entre eux sans aucune intervention.

L'invention vise en outre à rendre les canaux de transmission programmables par l'utilisateur.

Pour atteindre ces objets, la présente invention prévoit un circuit de transmission de données binaires sur le réseau électrique du type comportant un modulateur, un démodulateur et un circuit numérique de commande du modem et d'interprétation des données binaires, et comportant un circuit d'affectation d'un canal de transmission à une communication et des moyens pour sélectionner, parmi plusieurs canaux, un canal libre.

Selon un mode de réalisation de la présente invention, ledit circuit d'affectation comporte un dispositif pour sélectionner, parmi plusieurs canaux libres, celui qui possède le meilleur niveau de transmission, la sélection du canal s'effectuant, côté modem récepteur, durant une trame d'établissement d'une communication envoyée sur tous les canaux libres par un modem émetteur, et ledit dispositif de sélection délivrant, audit circuit de commande, un signal indicateur du canal sélectionné.

Selon un mode de réalisation de la présente invention, ledit dispositif de sélection commande, côté émission, un dispositif de modulation, sur au moins une fréquence choisie parmi plusieurs fréquences élevées définissant lesdits canaux de transmission, d'un signal déjà modulé par ledit modulateur et, côté réception, un dispositif de démodulation d'un signal reçu sur ledit canal sélectionné pour son meilleur niveau de transmission.

Selon un mode de réalisation de la présente invention, ladite trame d'établissement d'une communication comporte une séquence contenant la durée du message que s'apprête à envoyer ledit modem émetteur.

Selon un mode de réalisation de la présente invention, ladite trame d'établissement d'une communication comporte une séquence contenant les adresses respectives du modem émetteur de la trame et d'au moins un modem récepteur auquel elle est destinée.

Selon un mode de réalisation de la présente invention, le circuit de transmission émet, à la réception d'une trame d'établissement d'une communication qui lui est destinée, une trame de réponse à destination du modem émetteur, ladite trame de réponse étant émise, uniquement sur le canal qu'il a sélectionné lors de la réception de ladite trame d'établissement de la communication et possédant un format similaire à cette dernière.

Selon un mode de réalisation de la présente invention, ladite trame d'établissement d'une communication débute par une séquence pseudo-aléatoire d'une durée prédéterminée choisie en fonction de la durée nécessaire à la sélection d'un canal par ledit circuit d'affectation, ladite séquence pseudo-aléatoire étant suivie d'une séquence prédéterminée permettant audit circuit de commande d'identifier la trame comme une trame d'établissement d'une communication.

Selon un mode de réalisation de la présente invention, ledit circuit de commande délivre, audit circuit d'affectation, un signal de configuration lui indiquant les canaux libres, respectivement occupés.

Selon un mode de réalisation de la présente invention, ledit circuit de commande considère qu'un canal est libéré à l'expiration de la durée contenue dans la trame qui a établi la communication sur ce canal.

Selon un mode de réalisation de la présente invention, ledit modulateur est un modulateur par saut de fréquence, ledit démodulateur étant un démodulateur par saut de fréquence et chaque fréquence élevée, définissant un canal de transmission, étant choisie pour présenter, par rapport aux deux fréquences élevées qui lui sont voisines, un écart supérieur à l'écart entre les deux fréquences de la modulation FSK.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1 représente, sous forme de schéma-blocs, un premier mode de réalisation d'un circuit de transmission de données modulées par saut de fréquence équipé d'un circuit d'affectation d'un canal de transmission selon l'invention ;
la figure 2 représente la forme d'une trame d'établissement d'une communication selon l'invention ;
la figure 3 représente un mode de réalisation d'un dispositif de sélection du canal de transmission d'un circuit d'affectation tel que représenté à la figure 1 ;
la figure 4 représente un mode de réalisation d'un dispositif de modulation d'un circuit d'affectation tel que représenté à la figure 1 ; et
la figure 5 représente un mode de réalisation d'un dispositif de démodulation d'un circuit d'affectation tel que représenté à la figure 1.

Pour des raisons de clarté, seuls les éléments utiles à la compréhension de l'invention ont été représentés aux figures. De plus, les mêmes éléments ont été désignés aux différentes figures par les mêmes références.

Une caractéristique de la présente invention est d'effectuer une modulation du signal à transmettre sur plusieurs fréquences f'ᵢ définissant chacune, un canal de transmission. Ainsi, il est possible de sélectionner, en fonction de l'impédance du réseau entre deux modems souhaitant communiquer, celles des fréquences de transmission qui est la moins atténuée.

Si la transmission doit s'opérer en modulation FSK, le circuit selon l'invention effectue une surmodulation, sur au moins une fréquence f'ᵢ, d'un flux de données Tx déjà modulé par saut de fréquence (FSK). Cette surmodulation décale la fréquence centrale f_{c} des deux fréquences fₐ et f_{b} de la modulation FSK vers au moins une fréquence fᵢ plus élevée en respectant l'écart Δf = f_{b} - fₐ de la modulation FSK.

Dans le cas d'une modulation par saut d'amplitude (ASK), un flux de données binaires peut être directement modulé sur au moins une fréquence f'ᵢ par le circuit d'affectation selon l'invention. Si le circuit selon l'invention est associé à un modem existant, il effectue une surmodulation, sur au moins une fréquence f'ᵢ, d'un signal déjà modulé par saut d'amplitude. Cette surmodulation décale la porteuse f_{c} de la modulation ASK vers au moins une fréquence fᵢ plus élevée.

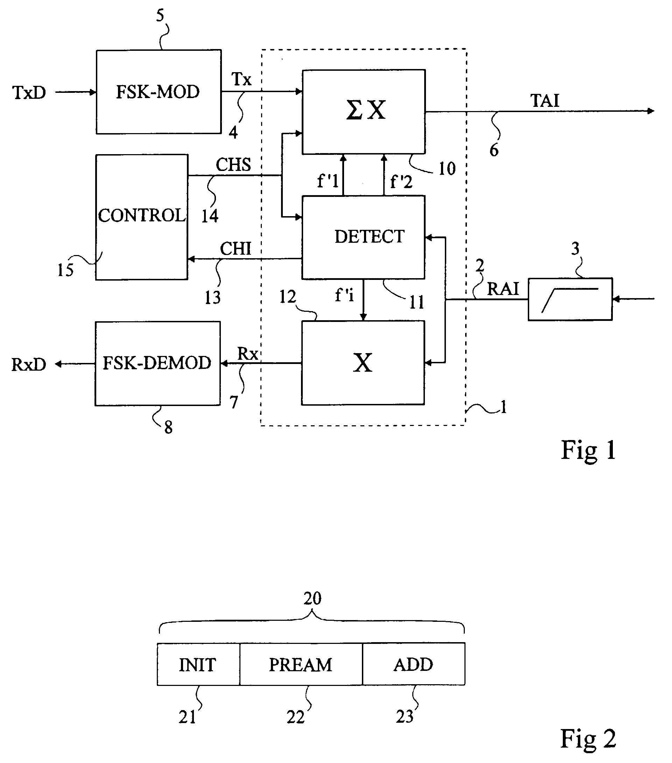

La figure 1 représente un premier mode de réalisation d'un circuit d'affectation d'un canal de transmission à une transmission de données modulées par saut de fréquence.

Le circuit d'affectation 1, selon l'invention, est intercalé entre un réseau électrique constituant un support de transmission par courant porteur et le modulateur/démodulateur proprement dit.

Une première borne d'entrée 2 du circuit 1 reçoit un signal RAI extrait du réseau au moyen d'une interface 3 chargée d'éliminer la composante haute-tension et basse-fréquence qui correspond à la porteuse fournie par l'alimentation électrique.

Une deuxième borne d'entrée 4 du circuit 1 reçoit un signal à transmettre Tx. Dans l'exemple représenté, ce signal Tx est un signal modulé par saut de fréquence par un modulateur FSK_MOD 5. La modulation effectuée, selon l'invention, par le circuit 1 s'applique à ce signal Tx pour délivrer, sur une première borne de sortie 6 du circuit 1, un signal TAI vers le réseau électrique.

Une deuxième borne de sortie 7 du circuit 1 délivre un flux de données reçues Rx à partir du signal reçu RAI. Si le signal RAI est un signal modulé en FSK, le signal Rx est encore modulé par saut de fréquence et est envoyé à un démodulateur FSK_DEMOD 8.

Le circuit 1 comporte un dispositif de modulation 10, sur au moins une fréquence élevée f'ᵢ définissant un canal de transmission, du signal Tx à émettre. Si, comme cela est représenté, l'entrée 4 du circuit 1 est reliée à la sortie d'un modulateur FSK 5, le signal Tx est déjà un signal en modulation FSK. Le dispositif 10 décale alors la fréquence centrale f_{c} de la modulation FSK vers au moins une fréquence élevée fᵢ en respectant l'écart Δf entre les deux fréquences fₐ et f_{b} de la modulation FSK.

Le circuit 1 comporte également un dispositif 11 de sélection d'un canal de transmission parmi plusieurs fréquences de modulation f'ᵢ qu'il génère. Le circuit 1 comprend, en outre, un dispositif de démodulation 12 chargé de reconstituer un signal Rx de même nature que le signal Tx. Si le signal Tx est un signal en modulation FSK, le dispositif 12 décale une des fréquences centrales élevées fᵢ du signal RAI vers la fréquence centrale f_{c} de la modulation FSK. Si le signal Tx est un signal modulé par saut d'amplitude ASK, le dispositif 12 décale la fréquence élevée fᵢ du signal RAI vers la porteuse de la modulation ASK d'origine. Si, par contre, le signal Tx est un flux de données binaires, le dispositif 12 restitue directement ce flux de données binaires.

Le circuit 1 délivre une seule fréquence élevée f'ᵢ correspondant au canal de transmission sélectionné au dispositif de démodulation 12. Par contre, il délivre au dispositif de surmodulation 10 toutes les fréquences f'ᵢ qu'il génère, ici deux f'₁ et f'₂, pour permettre une émission sur tous les canaux de transmission, au moins au début de chaque communication.

Une caractéristique de la présente invention est que l'affectation d'un canal de transmission entre deux modems, respectivement émetteur et récepteur d'une transmission, est effectuée, par le modem récepteur, en fonction de l'atténuation subie par différents canaux portant le même flux de données Rx sur le signal TAI émis par le modem émetteur.

Le signal TAI émis par un modem est constitué, au moins au début de chaque communication, de plusieurs flux de données identiques en modulation FSK présentant des fréquences centrales f₁ et f₂ différentes.

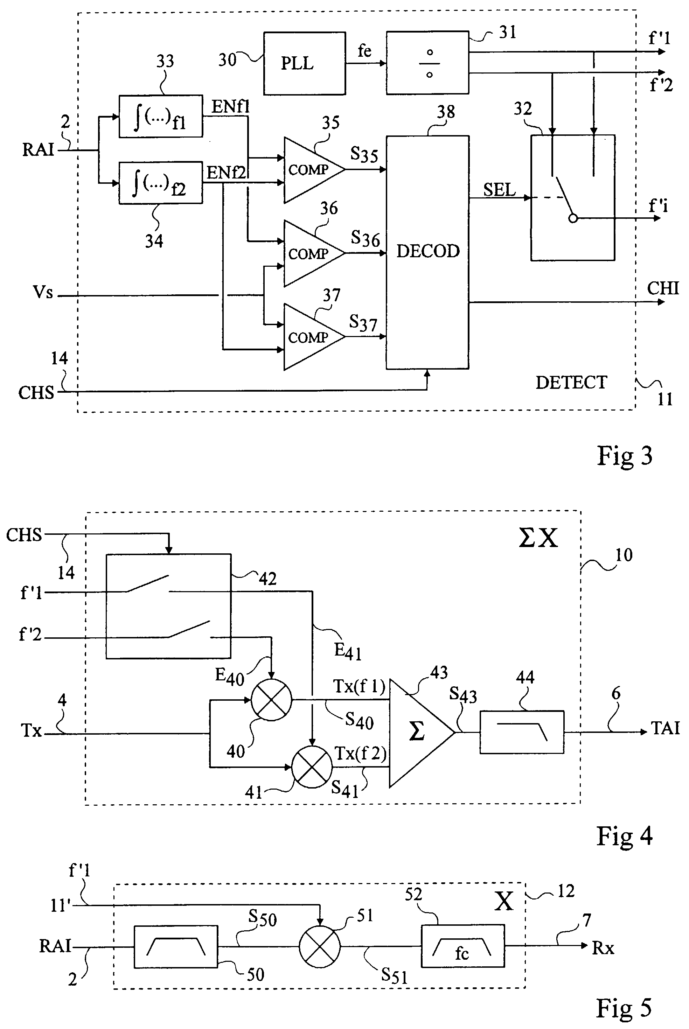

Lorsque qu'un modem émetteur souhaite émettre un flux de données binaires TxD, ce flux est modulé par saut de fréquence par son modulateur FSK 5. Le signal Tx est surmodulé, au sein du dispositif 10, en étant multiplié par les différentes fréquences élevées f'₁ et f'₂ délivrées par le dispositif 11, au moins au début de chaque communication. Les résultats de ces multiplications sont sommés, ou mélangés, comme on le verra par la suite en relation avec la figure 4, pour constituer le signal TAI. Le signal TAI comprend donc, au moins au début de chaque communication, deux flux de données identiques dont les fréquences centrales f₁ et f₂ sont différentes. On veillera à ce que les écarts entre les fréquences élevées f'₁ et f'₂ générées par le circuit 11 soient supérieurs à l'écart Δf entre les deux fréquences fₐ et f_{b} de la modulation FSK.

Le signal RAI reçu par un modem récepteur au début d'une communication comporte donc tous ces flux de données identiques. Mais, en fonction des fréquences fᵢ auxquelles sont transmis ces différents flux, ils sont plus ou moins atténués selon l'impédance du réseau entre les deux modems.

Le dispositif 11 du modem récepteur sélectionne, parmi les fréquences fᵢ, celle qu'il reçoit le mieux. En d'autres termes, le dispositif 11 d'un modem récepteur sélectionne, parmi tous les canaux de transmission de l'installation, celui pour lequel le flux de données contenu dans le signal RAI qu'il reçoit est le moins atténué. Dès qu'il a sélectionné un canal de transmission (réception), il délivre au dispositif de démodulation 12, la fréquence f'ᵢ qui correspond à ce canal. Ainsi, le dispositif 12 est configuré sur le canal qu'il reçoit le mieux du modem émetteur. Il reconstitue alors le flux de données Rx de ce canal comme on le verra par la suite en relation avec la figure 5 et le transmet au démodulateur FSK 8.

Un avantage de la présente invention est qu'elle permet d'affecter à la communication le meilleur canal possible.

Un autre avantage de l'invention est que cette affectation s'effectue de manière automatique.

Pour permettre, côté émission, une configuration du circuit d'affectation 1 en fonction du canal sélectionné, le dispositif de sélection 11 délivre, sur une troisième borne de sortie 13 et à l'attention d'un circuit numérique, ou processeur 15, de commande du modem, un signal CHI indicateur du canal sélectionné. De plus, le circuit 1 reçoit, sur une troisième borne d'entrée 14, un signal CHS délivré par le processeur 15 de commande et destiné à forcer l'affectation d'un canal de modulation. En d'autres termes, selon l'état du signal CHS, le dispositif 10 utilise, soit toutes les fréquences f'ᵢ générées par le dispositif 11 pour établir la communication, soit une seule de ces fréquences f'ᵢ lorsque la communication est établie. Pour ce faire, le dispositif 10 comporte, comme on le verra en relation avec la figure 4, des moyens, par exemple logiques, pour commuter les entrées de son mélangeur. Le signal CHS est également envoyé sur le dispositif 11 pour forcer la fréquence élevée f'ᵢ qu'il délivre au dispositif 12.

Lorsqu'il veut émettre un message, un modem émetteur commence, selon l'invention, par émettre une trame d'établissement de communication sur le réseau. Le rôle de cette trame est de permettre au modem destinataire, d'affecter un canal à cette communication.

Lorsqu'aucune communication n'est présente sur le réseau, tous les modems de l'installation sont placés dans un mode de scrutation dans lequel ils surveillent l'apparition d'une transmission.

La figure 2 représente un exemple d'une trame 20 d'établissement d'une communication selon l'invention.

Cette trame 20 est émise par un modem émetteur en étant surmodulée sur toutes les fréquences élevées f'ᵢ (ici, f'₁ et f'₂) qui sont délivrées, par son dispositif 11, à son dispositif 10. Ainsi, le signal TAI émis lors d'une trame 20 d'établissement de communication est constitué de plusieurs flux de données identiques en modulation FSK présentant des fréquences centrales fᵢ différentes.

La trame 20 débute par une première séquence pseudo-aléatoire INIT 21. Cette séquence 21 est destinée à permettre aux dispositifs 11 des autres modems raccordés au réseau de sélectionner, dans leur signal RAI (correspondant au signal TAI émis par le modem émetteur), celle des fréquences fᵢ qu'il reçoit le mieux. En d'autres termes, les dispositifs 11 sélectionnent, parmi tous les canaux de transmission de l'installation, celui pour lequel le flux de données contenu dans le signal RAI est le moins atténué. Dès qu'ils ont sélectionné un canal de transmission, les dispositifs 11 délivrent aux dispositifs de démodulation 12 auxquels ils sont respectivement associés, la fréquence f'ᵢ qui correspond à ce canal. La durée de la séquence INIT 21 est fixée en fonction du temps nécessaire à cette sélection par les dispositifs 11 des modems de l'installation. Ainsi, à la fin de la séquence INIT 21, tous les dispositifs 12 des modems de l'installation sont configurés sur le canal qu'ils reçoivent le mieux du modem émetteur.

La séquence INIT 21 est suivie d'une deuxième séquence PREAM 22 contenant un code prédéterminé d'identification d'une trame d'établissement de communication. Cette séquence 22 sert aux modems qui la reçoivent à déterminer qu'ils sont en train de recevoir une trame 20.

La séquence PREAM 22 est suivie d'une troisième séquence ADD 23 contenant les adresses du modem émetteur et du modem récepteur auquel est destiné le message que le modem émetteur s'apprête à envoyer. Le modem émetteur est commuté dans un mode de réception, ou scrutation, dès qu'il a fini d'émettre la trame 20.

les séquences PREAM 22 et ADD 23 sont interprétées par le processeur 15 de commande du modem qui est chargé, entre autres, d'exploiter les informations contenues dans le flux de données RxD.

Si un modem de l'installation reconnaît son adresse dans la séquence ADD 23, son processeur 15 le commute dans un mode d'émission pour qu'il indique au modem émetteur, le canal de transmission qu'il souhaite affecter à la communication.

Cette indication s'effectue, par le modem récepteur, en émettant lui-même une trame 20 d'établissement de communication. Cependant, cette trame est surmodulée uniquement sur la fréquence élevée f'ᵢ qui a été sélectionnée par son dispositif 11. Pour ce faire, le processeur 15 utilise l'indication du canal sélectionné qui lui est fournie par le signal CHI délivré par le dispositif 11 auquel il est associé. Il indique alors au dispositif 10, au moyen du signal CHS, ce canal sélectionné.

Dans la séquence ADD 23 de sa trame 20, le modem récepteur indique sa propre adresse ainsi que l'adresse du modem émetteur auquel est destinée la trame 20.

Ainsi, le modem émetteur ne reçoit une trame 20 que sur une fréquence centrale fᵢ (ici, f₁ ou f₂). Son dispositif 11 va donc sélectionner le canal associé à cette fréquence dans la mesure où le niveau des autres canaux est nul. Son dispositif 12 est donc configuré sur le canal utilisé pour la réponse du modem récepteur. Comme pour le modem récepteur, le processeur 15 du modem émetteur force son circuit 1, au moyen du signal CHS, pour qu'il émette désormais uniquement sur le canal sélectionné.

Ce canal est désormais affecté à la communication entre les deux modems. Le modem émetteur peut alors envoyer son message de manière classique.

Le fait de pouvoir forcer, au moyen du processeur 15, le canal de transmission permet, selon l'invention, une configuration personnalisée des différents circuits 1 pour autoriser la présence de plusieurs communications différentes et simultanées sur le même réseau.

Une telle caractéristique permet que n'importe quel modem puisse communiquer avec n'importe quel autre modem sur un canal alors même qu'un ou plusieurs des autres canaux est utilisé.

En effet, lorsqu'une première transmission apparaît sur le réseau, tous les modems (à l'exception du modem émetteur de cette transmission) détectent la transmission. Les modems qui ne sont pas destinataires de la première communication sont, de plus, maintenus en état de scrutation. Dès que le modem récepteur de la première transmission émet, en réponse, sa trame 20 d'établissement de communication, Les processeurs respectifs des autres modems sont donc en mesure, au moyen du signal CHI, de déterminer quel canal est utilisé. Comme les adresses 23 des deux modems (émetteur et récepteur) de la première communication sont contenues dans la trame 20, les autres modems savent également quels sont les deux modems qui sont occupés.

On prévoit alors que tous les modems qui ne sont pas destinataires de la première communication forcent, au moyen du signal CHS, leur dispositif 11 à ne pas délivrer, au dispositif 12 qui lui est associé, la fréquence utilisée par la première communication. Le signal CHS force alors également l'affectation d'au moins un canal libre à une deuxième communication émise par n'importe quel modem libre en forçant la fréquence de surmodulation de son dispositif 10.

Si l'installation n'utilise que deux canaux, c'est-à-dire si les dispositifs 11 des circuits 1 des modems ne génèrent que deux fréquences f'₁ ou f'₂, on ne pourra cependant pas sélectionner le meilleur canal possible pour cette seconde communication.

Par contre, si plus de deux canaux sont prévus dans les circuits 1, on peut maintenir une affectation automatique du meilleur canal parmi ceux qui sont libres. Dans ce cas, le signal CHS n'impose pas un canal donné mais indique le ou les canaux occupés pour que le circuit 1 émette la trame 20 relative à la deuxième communication, uniquement sur les canaux libres.

Pour ce faire, le signal CHS est, de préférence et dans le cas où les circuits 1 disposent de plus de deux canaux, un signal sur plusieurs bits. Le nombre de bits est, par exemple, égal au nombre de canaux.

Il est cependant nécessaire que tous les modems soient capables de déterminer la fin d'une transmission qui ne leur est pas destinée pour que leur circuit 1 puisse considérer de nouveau le canal qui était utilisé pour cette transmission comme un canal libre.

Pour ce faire, on prévoit que la longueur temporelle du message que souhaite envoyer un modem donné soit incluse dans la trame 20 d'établissement de la communication, par exemple, derrière la séquence d'adresse 23.

On prévoit alors, selon l'invention, que les processeurs des modems qui ne sont pas destinataires d'une transmission positionnent leur signal CHS, uniquement lorsqu'ils ont décodé la longueur du message que s'apprête à envoyer le modem émetteur. Ainsi, ces processeurs sont en mesure de repositionner leur signal CHS lorsque la durée du message est écoulée. Le canal est alors, de nouveau, considéré comme libre.

On veillera cependant à ce que la durée du message soit augmentée, par un modem qui n'est pas destinataire, de la durée nécessaire à l'émission, par le modem destinataire de la communication, de la trame 20 qu'il retourne au modem émetteur.

La seule contrainte fonctionnelle pour l'établissement de communications simultanées sur les différents canaux est qu'aucun modem ne doit chercher à établir une deuxième communication en émettant une trame 20 tant que la première communication est en train de s'établir. Dans le cas contraire, le modem émetteur de la première transmission risque de ne pas sélectionner le bon canal qui lui est indiqué par le modem récepteur de cette première transmission car il reçoit alors plusieurs canaux. Cette contrainte est, selon l'invention, respectée. En effet, si c'est au cours de la première trame 20 qu'un modem non destinataire de la transmission associée à cette trame mémorise la durée de la communication prévue, ce n'est qu'à la réception de la deuxième trame qu'il identifie le canal sélectionné. Il reste donc en mode de réception durant les deux trames 20.

Un avantage de la présente invention est qu'elle évite aux modems qui ne sont pas destinataires d'une communication de considérer un canal comme occupé alors que la communication ne va pas s'établir, par exemple, si le modem destinataire n'est pas connecté où s'il ne reçoit aucun canal avec un niveau suffisant.

Si un modem émetteur souhaite envoyer un même message à l'attention de plusieurs modems récepteurs, la trame 20 qu'il émet comporte un code (non représentée) indiquant qu'il s'agit d'une communication à destination d'un groupe. Lorsqu'un modem récepteur reçoit une trame 20 qui lui est destinée et qui comporte un code de transmission groupée, il retarde son basculement vers le mode d'émission d'un temps prédéterminé qui lui est propre. Il reste ainsi en mode de scrutation pendant ce temps et ne peut donc envoyer sa trame 20 de réponse si un autre modem est en train d'en envoyer une. Le rôle du retard affecté à chaque modem est d'éviter que deux modems récepteurs basculent en même temps en mode d'émission. Le modem émetteur va donc recevoir autant de trame 20 qu'il y a de modems destinataires de la transmission. Chaque trame 20 lui indique un canal de transmission ce qui lui permet de configurer son dispositif de surmodulation sur les canaux choisis par les modems récepteurs. Plusieurs modems récepteurs peuvent, bien entendu, avoir sélectionné un même canal.

Un avantage de la présente invention est qu'elle permet d'utiliser différents canaux de transmissions pour une même communication à destination de plusieurs modems en respectant la sélection du meilleur canal de transmission par les modems récepteurs. En effet, comme un modem émetteur transmet la trame 20 sur tous les canaux libres, chaque modem récepteur peut affecter à cette transmission le canal qu'il reçoit le mieux parmi ceux qui sont libres.

La figure 3 représente un mode de réalisation d'un dispositif de sélection 11 d'un circuit d'affectation 1 tel que représenté à la figure 1.

Comme il a été dit plus haut, ce dispositif 11 génère les fréquences élevées f'ᵢ (ici, f'₁ et f'₂) pour le dispositif 10 et sélectionne le meilleur canal pour délivrer, au dispositif 12, la fréquence élevée f'₁ ou f'₂ correspondante.

Le dispositif 11 comporte une boucle à verrouillage de phase PLL 30 qui délivre une fréquence d'entrée fₑ d'un diviseur de fréquence 31. Le diviseur de fréquence 31 est, de préférence, un diviseur numérique et est dimensionné pour délivrer autant de fréquences f'ᵢ que le nombre de canaux prévus pour le circuit 1. La fréquence fₑ délivrée par la PLL 30 est choisie pour être un multiple de chacune des fréquences f'ᵢ que l'on souhaite obtenir. Les fréquences f'₁ et f'₂ sont délivrées au dispositif 10 ainsi qu'à un commutateur 32 chargé de sélectionner, en fonction d'une consigne SEL qu'il reçoit, celle des fréquences f'₁ ou f'₂ qui est délivrée au dispositif 12.

Le signal RAI reçu par le circuit 1 est envoyé sur un nombre d'intégrateurs (ici deux) 33 et 34 égal au nombre de canaux du circuit 1. Ces intégrateurs 33 et 34 délivrent les niveaux d'énergie EN_{f1} et EN_{f2} des flux de données respectifs présents sur chacun des canaux. Ces niveaux d'énergie EN_{f1} et EN_{f2} sont envoyés sur deux entrées d'un premier comparateur COMP 35. Le signal de sortie S₃₅ de ce comparateur 35 permet d'identifier celui des canaux qui est reçu avec un niveau d'énergie le plus élevé.

De préférence, les niveaux d'énergie EN_{f1} et EN_{f2} sont également envoyés vers des comparateurs secondaires COMP, respectivement 36 et 37, dont le rôle est de comparer chaque niveau EN_{f1} et EN_{f2} par rapport à une valeur seuil Vs. Cela permet d'empêcher l'établissement d'une communication si tous les canaux sont reçus avec un niveau trop faible.

On notera que plus le nombre de fréquences f'ᵢ générées par le dispositif 11 est élevé, moins il y a de risque qu'une communication ne puisse pas s'établir.

Les sorties S₃₅, S₃₆ et S₃₇ des comparateurs 35, 36 et 37 sont envoyées à un circuit logique DECOD 38 recevant également le signal CHS. Le rôle du circuit 38 est de délivrer, en fonction des états respectifs des différents signaux S₃₅, S₃₆, S₃₇ et CHS, le signal SEL de commande du commutateur 32. La réalisation pratique du circuit logique 38 est à la portée de l'homme du métier en fonction des indications fonctionnelles données dans la présente description.

Si les deux signaux S₃₆ ou S₃₇ sont dans un état indiquant qu'aucun canal n'est reçu avec un niveau suffisant, la trame 20 reçue ne peut être démodulée car aucune fréquence f'ᵢ n'est délivrée au dispositif 12 du modem récepteur. Ainsi, ce modem n'émet pas de trame 20 en retour. Comme le modem émetteur attend cette trame 20 pour commencer à envoyer son message, il sait, au bout d'un temps prédéterminé, qu'aucun canal ne peut transmettre correctement le message vers le modem récepteur.

Un avantage de la présente invention est qu'elle permet d'indiquer rapidement (environ le temps de deux trames 20) à un modem émetteur, s'il va pouvoir émettre un message à destination d'un modem donné qui le recevra correctement. Ainsi, un modem qui doit émettre plusieurs messages différents à l'attention de différents modems (par exemple, la centrale d'une installation domotique) peut ne pas perdre de temps à émettre un message qui ne sera pas reçu correctement et qu'il devrait donc, dans les circuits classiques, réémettre. Il peut alors essayer d'émettre un autre message vers un autre modem et réessayer ultérieurement d'émettre à l'attention du premier modem.

Les intégrateurs 33 et 34 sont réalisés de manière classique. On veillera simplement à ce que le filtre d'entrée que comporte chaque intégrateur 33 et 34 soit un filtre passe-bande dont la largeur de bande correspond sensiblement à l'écart Δf entre les deux fréquences fₐ et f_{b} de la modulation FSK en étant centrée sur la fréquence f₁ ou f₂ à laquelle l'intégrateur est associé.

On notera que le dispositif 11 décrit ci-dessus peut être rigoureusement identique si le signal Tx est un signal en modulation ASK. Il suffit pour cela que la fréquence de la porteuse du signal Rx soit comprise entre les fréquences fₐ et f_{b} de la modulation FSK pour lesquelles est prévu le dispositif 11. En effet, les fréquences f₁ et f₂ des canaux de transmissions seront alors comprises dans les bandes passantes des intégrateurs 33 et 34.

Si le signal Tx est directement le flux de données binaires, les intégrateurs sont dimensionnés pour calculer les niveaux d'énergie reçus au voisinage des fréquences, respectivement f'₁ et f'₂.

La figure 4 représente un mode de réalisation d'un dispositif de modulation 10 d'un circuit d'affectation 1 tel que représenté à la figure 1.

Le dispositif 10 comporte deux multiplieurs 40 et 41 recevant, sur une première entrée, le signal Tx. Une seconde entrée E₄₀ et E₄₁ de chaque multiplieur reçoit une des fréquences f'₁ ou f'₂ générées par le dispositif 11. Ces fréquences f'₁ et f'₂ sont délivrées aux entrées E₄₀ et E₄₁, par l'intermédiaire d'un circuit de commutation 42. Le circuit 42 est commandé par le signal CHS.

Les sorties S₄₀ et S₄₁ des multiplieurs 40 et 41 délivrent le flux de données modulé en FSK Tx centré, respectivement, sur les fréquences f₁ ou f₂. Les nouvelles fréquences centrales f₁ et f₂ des flux de données modulés par saut de fréquence correspondent à la fréquence centrale f_{c} du modulateur FSK 5 multipliée par les fréquences, respectivement f'₁ et f'₂. Les sorties S₄₀ et S₄₁ sont envoyées sur des entrées d'un mélangeur 43. La sortie S₄₃ du mélangeur 43 délivre donc, lorsque les deux fréquences f'₁ et f'₂ sont envoyées sur les entrées E₄₀ et E₄₁, un signal comprenant deux fois le flux de données Tx centré sur des fréquences f₁ et f₂ différentes. Lorsqu'une seule fréquence f'₁ ou f'₂ est sélectionnée au moyen du signal CHS, la sortie S₄₃ délivre le flux de données Tx centré sur la fréquence f₁, respectivement f₂.

Le signal délivré par le mélangeur 43 traverse un filtre passe-bas 44 chargé d'éliminer le bruit haute-fréquence éventuel. La fréquence de coupure du filtre 44 est choisie pour être supérieure à la fréquence maximale des fréquences f₁ et f_{2,} majorée de l'écart ΔF de la modulation FSK. La sortie du filtre 44 constitue le signal TAI.

Si le signal Tx est un signal en modulation ASK ou un flux de données binaires, la constitution du dispositif 10 est identique.

La figure 5 représente un mode de réalisation d'un dispositif de démodulation 12 chargé de reconstituer un flux de données reçues Rx centré sur la fréquence centrale f_{c} du démodulateur FSK 8 (figure 1) du circuit 1.

Le signal RAI traverse un premier filtre passe-bande 50, de préférence, centré sur la fréquence fᵢ correspondant au canal sélectionné par le dispositif 11 et ayant une bande passante correspondant à l'écart de fréquence Δf de la modulation FSK. La commande du filtre 50 par le dispositif 11 n'a pas été représentée aux figures.

La sortie S₅₀ du filtre 50 est envoyée sur une première entrée d'un multiplieur 51 dont une seconde entrée reçoit la fréquence f'ᵢ délivrée par le dispositif 11. Le multiplieur 51 se comporte donc comme un démodulateur du signal transmis avec une fréquence centrale fᵢ. Ainsi, en sortie du multiplieur 51, le spectre fréquentiel comprend les fréquences fₐ et f_{b}, ou f_{c}-Δf et f_{c}+Δf, de la modulation FSK.

En variante, le filtre 50 présente une bande passante contenant toutes les fréquences susceptibles d'êtres transmises par les différents canaux. En d'autres termes, sa bande passante est alors comprise entre la plus petite des fréquences fᵢ, diminuée de la moitié de l'écart de fréquence Δf de la modulation FSK, et la plus grande des fréquences fᵢ, majorée de la moitié de l'écart Δf. Le spectre fréquentiel en sortie du multiplieur comprend, dans ce cas, les fréquences fᵢ-Δf et fᵢ+Δf de tous les canaux présents dans le signal RAI à l'exception des fréquences associées au canal démodulé par la fréquence f'ᵢ. Les fréquences de ce canal sont redevenues les fréquences fₐ et f_{b}, ou f_{c}-Δf et f_{c}+Δf, de la modulation FSK.

Le signal S₅₁ délivré par le multiplieur 51 traverse un filtre passe-bande 52 dont la bande passante correspond aux fréquences fₐ et f_{b} de la modulation FSK. Le filtre 52 élimine donc tous les flux de données qui sont restés centrés sur des fréquences fᵢ. La sortie du filtre 52 constitue le signal Rx envoyé vers le démodulateur FSK 8.

Comme pour le dispositif 11, le dispositif 12 décrit ci-dessus fonctionne, sans modification, si le signal Tx est en modulation ASK, pourvu que la fréquence de sa porteuse soit comprise entre les fréquences fₐ et f_{b} pour lesquelles le circuit 1 a été dimensionné.

En variante, le filtre 52 est un filtre passe-bas dont la fréquence de coupure correspond à la fréquence maximale f_{b} de la modulation FSK ou de la fréquence de la modulation ASK.

Les fréquences fₐ et f_{b} de la modulation FSK proprement dites sont, de préférence, comprises entre 200 Hz et 10 kHz. Un tel choix permet d'optimiser le fonctionnement du démodulateur FSK. De plus, cela facilite la réalisation d'un filtre passe-bande d'ordre élevé dans le dispositif 12 dans la mesure où la fréquence centrale f_{c} est alors relativement basse.

Les fréquences f₁ et f₂ sont choisies pour être importantes (par exemple entre environ 80 et 150 kHz) devant la fréquence de distribution de l'électricité (50 ou 60 Hz).

A titre d'exemple particulier de réalisation, un circuit d'affectation 1 selon l'invention peut être réalisé avec des valeurs de fréquence indiquées ci-dessous.

Les fréquences fₐ et f_{b} des modulateur et démodulateur FSK sont, par exemple, respectivement de 4,8 kHz et 6 kHz. L'écart de fréquence Δf est donc de 1,2 kHz et la fréquence centrale f_{c} est de 5,4 kHz.

Les fréquences de coupure du filtre passe-bande 52 du dispositif de démodulation 12 sont, dans ce cas, de 4,8 kHz et 6 kHz, le filtre étant symétrique.

On choisit, par exemple, trois fréquences f'₁, f'₂ et f'₃ générées par le dispositif de sélection 11. Ces fréquences sont par exemple, respectivement de 99 kHz, 110 kHz et 132 kHz. La fréquence fₑ de la PLL 30 est, par exemple, de 3,960 MHz et correspond donc, respectivement, à un multiple de 40, 36 et 30 des fréquences f'₁, f'₂ et f'₃.

Les fréquences centrales obtenues pour les différents canaux correspondent à la somme de la fréquence f'₁, f'₂ ou f'₃ correspondant au canal et de la fréquence centrale f_{c} de la modulation FSK proprement dite. On obtient donc trois canaux possédant, respectivement, des fréquences centrales f₁, f₂ et f₃ de 104,4 kHz, 115,4 kHz et 137,4 kHz.

Ces canaux respectent bien la condition relative au non chevauchement des signaux modulés qu'ils transmettent. En effet, les données se trouvent transmises sous la forme d'échantillons de portion de fréquences de 103,8 et 105 kHz pour le premier canal, de 114, 8 et 116 kHz pour le deuxième canal et de 136,8 et 138 kHz pour le troisième canal.

Les filtres passe-bande des intégrateurs du dispositif de sélection 11 présentent une largeur de bande passante de 1,2 kHz et sont centrés, respectivement sur les fréquences de 104,4 kHz, 115,4 kHz et 137,4 kHz. La fréquence de coupure du filtre passe-bas 44 du dispositif de modulation 10 est, par exemple, de 140 kHz.

Selon un deuxième mode de réalisation non représenté, le dispositif de modulation 10 (figure 1) et le modulateur FSK 5 peuvent être remplacés par des modulateurs FSK numériques d'un même flux de données TxD, directement sur au moins deux fréquences centrales fᵢ différentes. Dans ce cas, le dispositif de sélection 11 n'a pas besoin de générer de fréquences élevées f'ᵢ. Les sorties numériques des modulateurs FSK sont, chacune converties en un signal analogique. Ces signaux analogiques traversent un commutateur commandé par des signaux que délivre alors le circuit de sélection à la place des fréquences f'ᵢ.

Un avantage de la présente invention est qu'elle permet d'optimiser le fonctionnement de modems utilisant le réseau électrique comme support de transmission en autorisant l'emploi de différentes fréquences centrales fᵢ du flux de données modulées en FSK pour autoriser la présence simultanée de différentes communications sur un même réseau.

Un autre avantage de la présente invention est qu'elle ne nécessite aucune modification de la structure des modulateurs et démodulateurs FSK. Le circuit selon l'invention peut donc être implanté dans une installation existante. On place un circuit d'affectation 1 entre chaque modem et le réseau électrique et on adapte le logiciel du processeur numérique de commande 15 du modem de manière appropriée.

Un autre avantage de la présente invention est que des circuits d'affectation comportant des nombres de canaux différents sont parfaitement compatibles entre eux. En effet, il suffit que deux circuits d'affectation possèdent au moins une fréquence f'ᵢ commune pour qu'ils permettent une communication entre les deux modems auxquels ils sont respectivement associés.

On peut également prévoir que le circuit d'affectation 1 selon l'invention soit rendu programmable par l'utilisateur. En effet, il suffit de rendre programmables le diviseur 31 et les filtres des intégrateurs 33 et 34 du dispositif 11 pour que l'utilisateur puisse choisir les fréquences des canaux. Si les autres filtres du circuit 1 ne sont pas eux aussi programmables, la plage de fréquences utilisable est cependant limitée par la fréquence de coupure du filtre passe-bas 44 du dispositif 10.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction.

De plus, l'invention s'applique que la modulation utilisée soit une modulation FSK ou ASK et quel que soit le type de données binaires et la structure du message à transmettre.

En outre, alors que certaines des explications précédentes ont été données par souci de clarté en utilisant un vocabulaire qui correspond parfois à un fonctionnement analogique, il sera clair pour l'homme du métier que tous les éléments du circuit d'affectation selon la présente invention qui peuvent traiter des signaux numériques pourront correspondre, en pratique, à des réalisations logicielles.

## Revendications

1. Circuit de transmission de données binaires sur le réseau électrique du type comportant un modulateur (5), un démodulateur (8) et un circuit numérique (15) de commande du modem et d'interprétation des données binaires, caractérisé en ce qu'il comporte un circuit (1) d'affectation d'un canal de transmission à une communication et des moyens pour sélectionner, parmi plusieurs canaux, un canal libre.

2. Circuit de transmission selon la revendication 1, caractérisé en ce que ledit circuit d'affectation (1) comporte un dispositif (11) pour sélectionner, parmi plusieurs canaux libres, celui qui possède le meilleur niveau de transmission, la sélection du canal s'effectuant, côté modem récepteur, durant une trame (20) d'établissement d'une communication envoyée sur tous les canaux libres par un modem émetteur, et ledit dispositif de sélection (11) délivrant, audit circuit de commande (15), un signal (CHI) indicateur du canal sélectionné.

3. Circuit de transmission selon la revendication 2, caractérisé en ce que ledit dispositif de sélection (11) commande, côté émission, un dispositif (10) de modulation, sur au moins une fréquence (f'ᵢ) choisie parmi plusieurs fréquences élevées (f'₁, f'₂) définissant lesdits canaux de transmission, d'un signal (Tx) déjà modulé par ledit modulateur (5) et, côté réception, un dispositif (12) de démodulation d'un signal reçu (RAI) sur ledit canal sélectionné pour son meilleur niveau de transmission.

4. Circuit de transmission selon la revendication 2 ou 3, caractérisé en ce que ladite trame (20) d'établissement d'une communication comporte une séquence contenant la durée du message que s'apprête à envoyer ledit modem émetteur.

5. Circuit de transmission selon la revendication 4, caractérisé en ce que ladite trame (20) d'établissement d'une communication comporte une séquence (23) contenant les adresses respectives du modem émetteur de la trame (20) et d'au moins un modem récepteur auquel elle est destinée.

6. Circuit de transmission selon la revendication 5, caractérisé en ce qu'il émet, à la réception d'une trame (20) d'établissement d'une communication qui lui est destinée, une trame de réponse à destination du modem émetteur, ladite trame de réponse étant émise, uniquement sur le canal qu'il a sélectionné lors de la réception de ladite trame (20) d'établissement de la communication et possédant un format similaire à cette dernière.

7. Circuit de transmission selon l'une quelconque des revendications 4 à 6, caractérisé en ce que ladite trame (20) d'établissement d'une communication débute par une séquence pseudo-aléatoire (21) d'une durée prédéterminée choisie en fonction de la durée nécessaire à la sélection d'un canal par ledit circuit d'affectation (1), ladite séquence pseudo-aléatoire (21) étant suivie d'une séquence prédéterminée (22) permettant audit circuit de commande (15) d'identifier la trame comme une trame (20) d'établissement d'une communication.

8. Circuit de transmission selon l'une quelconque des revendications 4 à 7, caractérisé en ce que ledit circuit de commande (15) délivre, audit circuit d'affectation (1), un signal (CHS) de configuration lui indiquant les canaux libres, respectivement occupés.

9. Circuit de transmission selon la revendication 8, caractérisé en ce que ledit circuit de commande (15) considère qu'un canal est libéré à l'expiration de la durée contenue dans la trame (20) qui a établi la communication sur ce canal.

10. Circuit de transmission selon l'une quelconque des revendications 1 à 9, caractérisé en ce que ledit modulateur (5) est un modulateur par saut de fréquence (FSK), ledit démodulateur (8) étant un démodulateur par saut de fréquence et chaque fréquence élevée (f'ᵢ), définissant un canal de transmission, étant choisie pour présenter, par rapport aux deux fréquences élevées qui lui sont voisines, un écart supérieur à l'écart (ΔF) entre les deux fréquences (fₐ, f_{b}) de la modulation FSK.
